# EUROPEAN PATENT SPECIFICATION

(11) **EP 2 621 076 B1**
(45) Date of publication and mention of the grant of the patent: **28.11.2018**
(21) Application number: 12382024.3
(22) Date of filing: 24.01.2012
(51) Int. Cl.: H02M 7/49, H02M 1/00, H02M 3/337, H02J 3/36

(54) **Multicell AC/DC power converter with isolated DC/DC converter stages**
Multizellen AC/DC Umrichter mit isolierten DC/DC Stufen
Convertisseur C.A./C.C. multi-cellule avec étages convertisseurs C.C./C.C. isolés

(43) Date of publication of application: 31.07.2013
(73) Proprietor: Ingeteam Power Technology, S.A., 48170 Zamudio (ES)
(72) Inventor: Atutxa Lekue, Iñigo, 48170 ZAMUDIO (ES)
(74) Representative: Igartua, Ismael

(56) References cited:
- EP-A1- 1 657 809
- EP-A1- 2 290 799
- US-A- 5 638 263
- US-A1- 2008 304 300
- US-A1- 2010 314 937
- JIE CHEN ET AL: "Design of DC Architecture for Large-Scale Non-Grid-Connected Wind Power Generation System", POWER AND ENERGY ENGINEERING CONFERENCE, 2009. APPEEC 2009. ASIA-PACIFIC, IEEE, PISCATAWAY, NJ, USA, 27 March 2009 (2009-03-27), pages 1-5, XP031454753, ISBN: 978-1-4244-2486-3
- KNUDSEN L ET AL: "DESCRIPTION AND PROSPECTIVE APPLICATIONS OF NEW MULTI-TERMINAL HVDC SYSTEM CONCEPTS", CIGRE CONF. INTERNATIONALE DES GRANDS RESEAUX ELECTRIQUES, XX, XX, 26 August 1990 (1990-08-26), pages 1-11, XP000770178,

## Description

### TECHNICAL FIELD

The invention relates to electric power converter apparatuses for electric power transmission systems, and more specifically to electric Direct Current power transmission systems.

### PRIOR ART

Traditionally there have been two solutions for the transmission of power: AC network and DC networks. The vast majority of existing power sources generates AC power. In addition, the invention of the transformer enabled AC voltage levels to be increased in a simple manner, allowing the transportation of large amounts of power with relatively low current levels, thereby reducing the section of the conductors and transmission losses. Another advantage of AC networks is the ease with which faults may be cleared due to the fact that the current passes through zero twice in each period. Elements designed for such a purpose, known as AC breakers, simply open the connection mechanically, with the arc generated being extinguished when the current passes through zero. However, AC networks present a drawback when the length of the network increases. As the transmission line length increases, the effects of the parasitics elements existing in the line increases the reactive power that travels through the line, with the losses also increasing, making the construction of AC lines of great lengths unviable without the introduction of elements for compensating reactive power. This restriction is accentuated when cables are used instead of overhead lines due to the fact that the parasitic capacity of the cables is very high.

With the objective of enhancing efficiency in the transmission of large amounts of electric power over long distances, the first HVDC (High Voltage Direct Current) lines were developed as early as the 1950s. An HVDC system is based on the conversion of AC-generated power to DC power by means of a static converter, its transmission as DC power and, at the point of consumption, its conversion once again to AC power by means of another static converter. With the objective of reducing the current, the transmission is carried out at the highest possible voltage. In the 1960s the thyristor began to be used as the semi-conductor switches in static converters for HVDC. The preferred topology was the Current Source Converters using series connected thyristors.

Today there are hundreds of HVDC lines based on this topology. This topology is simple, relatively cheap and very efficient, but it also has one important drawback. Due to the fact that it is a Line Commutated Converter a strong AC network is necessary in the two terminals of the DC line. This means that whenever one of the AC networks is disconnected or they do not have the necessary short-circuit power, this solution can no longer be applied. In addition, the harmonic content of this type of converter is high and the power factor cannot be controlled and depends on the load of the converter, as a result of which a large amount of filters need to be installed, both in AC and DC, with the objective of complying with network regulations with regard to power quality and reducing the consumption of reactive power. Finally, in this type of converter the current through the HVDC line is constant whereas the DC voltage varies according to the amount and the direction of the power to be transmitted; ie, if the power flow changes direction the DC voltage sign changes. This means that the cables used for the transmission must be able to tolerate voltage reversals, as a result of which paper-insulated cables are used.

The proliferation of wind power from the 1990s onwards and the increase in offshore wind farms result in the need to create HVDC connections capable of tolerating a weak network in one of the terminals. It was at this time that the possibility of developing a Europe-wide HVDC network to replace the existing HVAC network was first raised, and in order to develop this new network it is necessary to implement an HVDC network that operates with a constant voltage to enable different HVDC lines to be connected and thereby create a multi-terminal HVDC network.

With the objective of responding to these new requirements, new Voltage Source Converter topologies using forced-switching semi-conductors, mainly IGBTs, and a sufficient bus voltage level for generating an HVDC line appear for the static converters of HVDC network stations. This type of converter is capable of working with weak networks and it may even operate with no network. Additionally, the reactive power consumed may be controlled, and as it generates a constant HVDC voltage line it enables multi-terminal networks to be created, provided that the voltage of the different lines is the same. Finally, this new technology allows the use of XLPE-type cables, as the cables operate at a constant voltage, these being cheaper and lighter than paper-insulated ones.

There are two clearly distinguishable types of voltage source converters for HVDC applications. The first type of converter is based on simple and long-standing topologies such as the two-level converter or three-level NPC converter, using the series connection of IGBTs to reach the necessary voltages. This system enables, by means of the selection of a suitable switching frequency, the reduction of the harmonics generated by the converter in comparison with HVDC converters based on thyristors and, therefore, the reduction of the required harmonic filters. In contrast, the increase in the switching frequency leads to the increase of the converter losses, and therefore the efficiency of these converters is significantly inferior to that of the HVDC converters based on thyristors.

The second type of voltage source converter for HVDC applications is described in the document DE 10103031 A1, in which a new topology based on the series connection of converters instead of semi-conductors for reaching the required constant high voltage levels is disclosed, these being known as MMCs (Modular Multilevel Converters). This topology presents several advantages compared to the IGBTs series connection topologies such as a practically sinusoidal AC voltage which makes the AC filters virtually disappear, and improved efficiency, very similar to the efficiency of the classic solutions with thyristors.

Document WO 2007028349 A1 discloses an apparatus for transmitting electric power that comprises at least one converter with the topology disclosed in document DE 10103031 A1, and a controller for controlling a certain amount of parameters of the converter, providing the enhancement of the transmission system stability to which the apparatus is connected and optimising the transmission current quality. The document "Design of DC Architecture for Large-Scale Non-Grid-Connected Wind Power Generation System" discloses a dc architecture for large-scale non-grid-connected wind power generation system (WPGS). The proposed structure eliminates reactive power, low power loss, long transfer distance, and etc.

The patent document EP 1657809 A1 discloses a bidirectional power converter that comprises converter cells each comprising: a first AC/DC converter which performs bidirectional power conversion between single-phase AC power and DC power; a second AC/DC converter whose DC side is connected to the DC side of the first AC/DC converter, and which performs bidirectional power conversion between single-phase AC power and DC power; a third AC/DC converter which performs bidirectional power conversion between single phase AC power and DC power; and a high-frequency transformer which is connected between the AC side of the second AC/DC converter and the AC side of the third AC/DC converter.

The patent document EP 2290799 A1 discloses a converter arrangement that includes at least one converter phase module. The converter phase module is used to connect an AC line of an AC network to transmission lines that can be used for high-voltage direct current (HVDC) power transmission. The converter phase module includes a series of interconnected converter section module. Each converter section module includes a DC/DC converter unit and a DC/AC converter unit connected to the DC/AC converter unit by a dc link. The AC/DC converters of the converter section modules are interconnected in series and operate is a cascade mode. The DC/DC converters of the converter section modules can be interconnected in series or parallel.

### BRIEF DISCLOSURE OF THE INVENTION

It is an object of the invention to provide an electric power converter apparatus for High Voltage Direct Current electrical transmission systems, as specified in independent claim 1. Further advantageous features are specified in the dependent claims. The electric power converter apparatus of the invention comprises an AC power input, and at least one conversion module with an AC power input through which it receives the AC power to be converted, and with DC power outputs connected to high-voltage direct-current or HVDC lines. The apparatus comprises a plurality of modules that are connected in series both on the AC side and on the DC side, where the series connection of the inputs of the different modules forms the input of the apparatus. Each module comprises an AC-DC converter that receives the AC voltage through its corresponding input and which converts the AC voltage into a low or medium DC voltage, and at least two DC-DC converters connected to the output of the AC-DC converter to convert the low or medium DC voltage into low, medium or high DC voltage, the outputs of the module corresponding to the outputs of the DC-DC converters, and the apparatus being connected to the HVDC lines by means of the series connection of the outputs of the different modules corresponding to the high-voltage lines. The series connection of the outputs of the different modules enables the increase of the total voltage, therefore the output voltage of each module can also be either low or medium voltage.
As a result AC power is converted into high-voltage DC power in a simple manner. In addition, the modular arrangement of the apparatus of the invention allows obtaining a voltage with a greatly reduced harmonic content, which avoids the need for filters and also allows providing an apparatus with redundant modules, so that the apparatus is able to operate despite the breakage of one of its modules.
Each DC-DC converter comprises a transformer with a topology that guarantees the galvanic isolation between its primary and its secondary. Each apparatus is adapted to be connected to a plurality of high-voltage direct-current lines, and each module of the apparatus comprises a DC-DC converter for each line. All the DC-DC converters of a single module receive the output of the AC-DC converter of the same module, to convert it into the high-voltage direct power required for the corresponding line by means of the series connection of the outputs of the different modules corresponding to each high-voltage direct-current line. These and other advantages and characteristics of the invention will be made evident in the light of the drawings and the detailed description thereof.

### DESCRIPTION OF THE DRAWINGS

Figure 1 schematically shows and by way of example an embodiment of a power converter apparatus of the invention, which comprises three conversion modules and which is adapted to be connected to two high-voltage direct-current lines.
Figure 2 schematically shows and by way of example a power converter apparatus connected to a three-phase AC network, which comprises a plurality of conversion modules in each phase and which is arranged in star configuration. Since it is connected to only one HVDC line, this example circuit does not fall into the scope of the claims.
Figure 3 schematically shows and by way of example a power converter apparatus connected to a three-phase AC network, which comprises a plurality of conversion modules in each phase and which is arranged in triangle configuration. Since it is connected to only one HVDC line, this example circuit does not fall into the scope of the claims.
Figure 4 shows an embodiment of a conversion module of Figure 1, which comprises a two-level H-bridge AC-DC converter and a DC-DC converter with the DAB (Dual Active Bridge) topology that provides the ability of power transmission in both directions.
Figure 5 shows an embodiment of a conversion module of Figure 1, which comprises a two-level H-bridge AC-DC converter and a DC-DC converter with a topology that allows the power transmission in only one direction.
Figure 6 shows an embodiment of a conversion module of Figure 1, which comprises a two-level H-bridge AC-DC converter and a DC-DC converter with a topology that allows the power transmission in only one direction, the opposite direction to the one permitted by the embodiment of Figure 5.
Figure 7 schematically shows and by way of example an embodiment of the electric DC power transmission system of the invention.

### DETAILED DISCLOSURE OF THE INVENTION

A first aspect of the invention is related to a power converter apparatus 100 for High Voltage Direct Current electrical transmission systems. The apparatus 100 comprises an AC voltage input 15, and at least one conversion module 10 with an AC power input 11 through which it receives the AC power to be converted and with a DC output 13 or bus that is connected to a high-voltage direct-current line 2 or HVDC line and through which the converted DC power of the module 10 is transmitted.

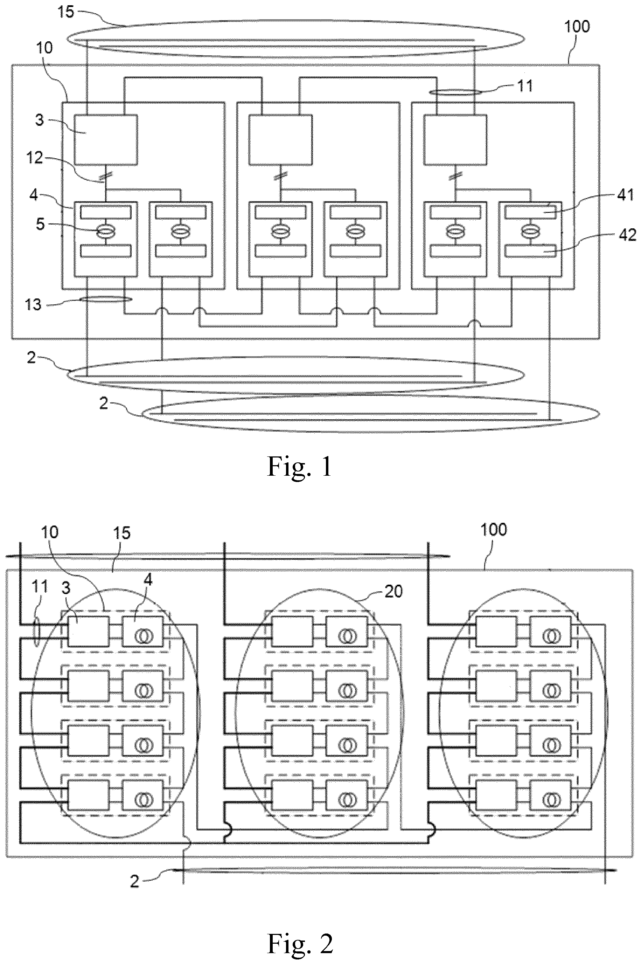

The apparatus 100 comprises a plurality of modules 10 that are connected in series both on the AC side and on the DC side, where the series connection of the inputs 11 of the different modules 10 forms the input 15 of the apparatus. Figure 1 shows by way of example an embodiment of the apparatus 100 which comprises three modules 10 connected in series, the input 15 in this case being a single-phase input. Each module 10 comprises an AC-DC converter 3 that receives the AC voltage through the corresponding input 11 and which converts the AC voltage into a low or medium DC voltage, and at least one DC-DC converter 4 connected to the bus or output 12 of the AC-DC converter 3 to convert the low or medium DC voltage into a low, medium or high DC voltage. The output 13 of the module 10 corresponds to the output of the DC-DC converter 4, so that the apparatus 100 is connected to at least one high-voltage direct-current line 2 by means of the series connection of the outputs 13 of the different modules 10 of the apparatus 100 corresponding to said high-voltage line 2. The series connection of the outputs 13 of the different modules 10 enables the increase of the total voltage, therefore the output voltage of each module 10 can also be either low or medium voltage.

Each module 10 can be adapted to be connected to a plurality of high-voltage direct-current lines 2 or HVDC lines, and comprises a DC-DC converter 4 for each high-voltage direct-current line 2, connected to the output 12 of the AC-DC converter 3. The DC-DC converters 4 generate low, medium or high DC voltages isolated from each other which exit through the corresponding outputs 13, those being connected in series with the outputs 13 corresponding to the same line 2 of other modules 10. The isolation between the DC voltages of the different outputs 13 is achieved by means of a transformer 5 included into each DC-DC converter 4. The inclusion of the transformers 5 also makes possible to adjust the DC voltage of each output 13 by means of the transformation ratio, which allows the connection of HVDC lines 2 of different voltages by means of a single apparatus 100. The possibility of adjusting the transformation ratio of the transformer 5 also enables the connection of AC lines to DC lines of very different voltages using the AC-DC converters 3 in their optimum operating point, the voltage being adjusted by means of the transformation ratio of the transformer 5.

As various lines 2 can be connected to a single AC voltage network, additionally the effect of a fault on the AC side over the power transmission between the different HVDC lines 2 is avoided, as well as the effect of a fault on one of the HVDC transmission lines 2 over the power transmission between the AC side and the rest of the HVDC transmission lines 2 is also avoided.
In a preferred embodiment, the AC-DC converter 3 can be an H-bridge with any existing topology leg, thus enabling the series connection of the AC voltage inputs in the event of there being more than one module 10 in the apparatus 100. As a result, the apparatus 100 can be connected to AC lines of different voltage levels by means of the series connection of the different modules 10. In fact, taking into consideration the AC-DC converters 3 alone, the series connection of the said AC-DC converters 3 constitutes in the preferred embodiment a converter currently known in the prior art as a chain-link topology with an n number of levels in the output voltage, n being a positive whole number depending on the number of cascaded H-bridges and on the individual topology of each of these H-bridges. With all the modules 10 being disposed in series, the AC-DC stage of the apparatus 100 can be described as a converter with a single-phase AC voltage input 15 composed by the sum of the different AC voltage inputs 11 of the modules 10 series connected.

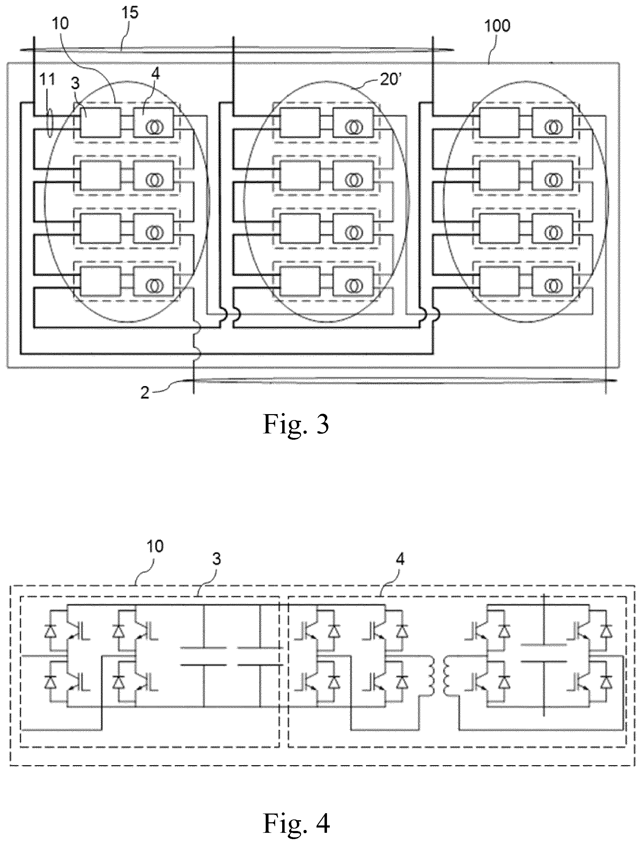

Similarly, the modules 10 can be configured in three series 20, 20' instead of one, enabling the connection of the apparatus 100 to three-phase AC networks. Figures 2 and 3 show by way of example an apparatus 100 connected to a three-phase AC network that comprises three series 20, 20' of four modules 10 each, each module 10 comprising an AC-DC converter 3 and a single DC-DC converter 4, the apparatus 100 being able to be arranged in star configuration, as shown in Figure 2, or in triangle configuration, as shown in Figure 3. In the examples of Figures 2 and 3 the input 15 of the apparatus 100 corresponds to a three-phase AC voltage input. Since each apparatus is connected to only one HVDC line, these example circuits do not fall into the scope of the claims.

The topology used for the DC-DC converter 4 can be any of those known to this point, provided that a galvanic isolation between the primary 41 and the secondary 42 of said DC-DC converter 4 is ensured. In a preferred embodiment the DC-DC converter 4 can have the ability to transmit power in both directions, such as the DAB (Dual Active Bridge) topology, which is a topology currently known in the prior art.

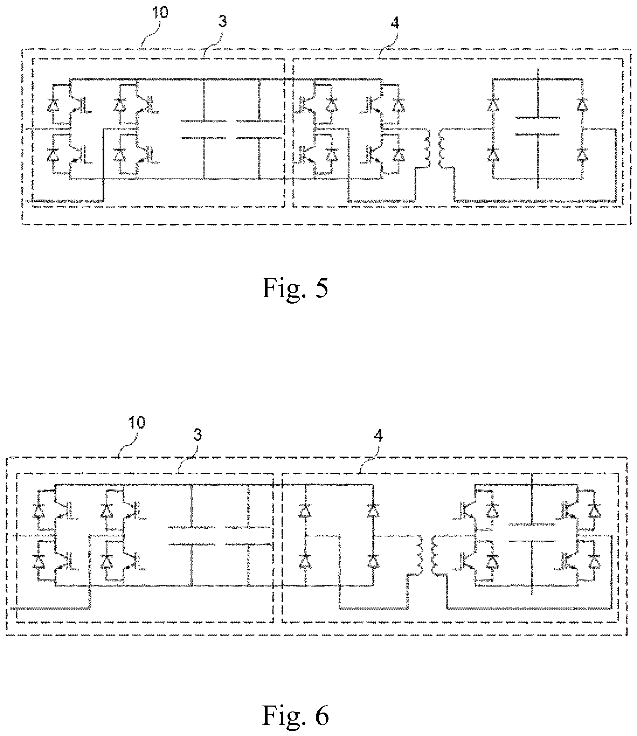

Figure 4 shows a module 10 with a two-level H-bridge AC-DC converter 3 and a DC-DC converter 4 of the DAB type. In other embodiments the DC-DC converter 4 can have the ability to transmit power in one direction only, for example by using a diode bridge on one of the sides of the DC-DC converter 4. Figure 5 shows a possible embodiment of the module 10 comprising a DC-DC converter 4 that only allows power to be transmitted from the AC power input 11 to the DC power output 13. Alternatively, Figure 6 shows another possible embodiment of the module 10 with a DC-DC converter 4 that only allows power to be transmitted from the DC power output 13 to the AC power input 11.

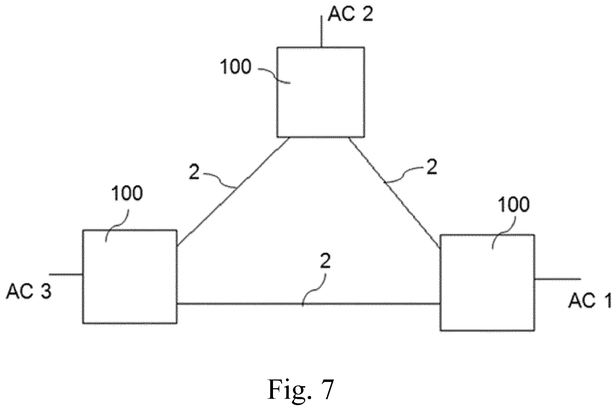

A second aspect of the invention relates to an electric DC power transmission system, such as the one shown by way of example in Figure 7, which comprises at least one power converter apparatus 100 such as the one described in the first aspect of the invention. The system of the invention can comprise a plurality of apparatuses for converting AC power into high-voltage DC power, without all of them being like an apparatus 100 of the invention, though preferably all the apparatuses are like that of the invention. Thus, all the apparatuses 100 can be arranged forming a DC transmission ring that continues to operate correctly even in the case of failure of one of the HVDC lines 2 it comprises. As commented above, thanks to the DC-DC converters 4, two HVDC lines 2 of different average DC voltages can be very easily communicated and connected with each other through a single apparatus 100, due to the fact that the transformer 5 ratios of each DC-DC converter 4 can be adjusted individually so that the apparatus 100 is configured to be connected to two HVDC lines 2 of different voltages. The example of Figure 7 shows a system with three apparatuses 100 according to the invention, where each one of them receives an AC voltage AC 1, AC 2 and AC 3 respectively. In addition, each apparatus 100 is connected to two HVDC lines 2.

## Claims

1. Electric power converter apparatus for an electric DC power transmission system, comprising a plurality of conversion modules (10), with an AC power input (11) configured to receive the alternating power (AC) to be converted and with a direct power output (13) configured to be connected to a high-voltage direct-current line (2), said AC power inputs (11) and direct power outputs (13) of said plurality of conversion modules (10) being connected in series both on the alternating side and on the direct side, each module (10) comprising an AC-DC converter (3) configured to receive the alternating voltage through the input (11) and convert the alternating voltage into a low or medium DC voltage, and at least two DC-DC converters (4) connected to the output (12) of the AC-DC converter (3) and configured to convert the low or medium DC voltage into a low, medium or high DC voltage, the outputs (13) of the module (10) corresponding to the outputs of the DC-DC converters (4), the apparatus (100) being configured to be connected to at least one high-voltage direct-current line (2) by means of the series connection of the outputs (13) of the DC-DC converters (4) of the different modules (10) corresponding to said high-voltage line (2), and wherein each DC-DC converter (4) comprises a transformer (5) with a topology that guarantees the galvanic isolation between its primary (41) and its secondary (42),
**characterized in that**
the apparatus (100) is further configured to be connected to a plurality of high-voltage direct-current lines (2), each module (10) of the apparatus (100) comprising a DC-DC converter (4) for each line (2), and all the DC-DC converters (4) of a single module (10) configured to receive the output (12) of the AC-DC converter (3) of the same module (10), and to convert it into the high-voltage direct power required for the corresponding high-voltage direct-current line (2) by means of the series connection of the outputs (13) of the different modules (10) corresponding to one of the high-voltage direct-current lines (2).

2. Apparatus according to claim 1, wherein the AC-DC converter (3) is of the H-bridge type.

3. Apparatus according to claim 2, wherein the apparatus (100) is connected to a three-phase medium or high voltage AC network by means of the series connection of the AC-DC converters (3) of the different modules (10), the AC-DC converters (3) being connected in such a way that the corresponding inputs (11) form three independent series (20) arranged in star configuration.

4. Apparatus according to claim 2, wherein the apparatus (100) is connected to a three-phase medium or high voltage AC network by means of the series connection of the AC-DC converters (3) of the different modules (10), the AC-DC converters (3) being connected in such a way that the corresponding inputs (11) form three independent series (20') arranged in triangle configuration.

5. Electric DC power transmission system, comprising a plurality of power converter apparatuses for converting alternating power into direct power connected to each other, **characterised in that** at least one of the apparatuses is an apparatus (100) according to any of the preceding claims.

## Patentansprüche

1. Elektrische Leistungswandlervorrichtung für ein elektrisches Gleichstrom-Leistungsübertragungssystem, umfassend eine Vielzahl von Umwandlungsmodulen (10) mit einem Wechselstrom-Leistungseingang (11) zum Empfangen der umzuwandelnden Wechselstromleistung (AC) und mit einem AC-Leistungsausgang (13), der konfiguriert ist, an eine Hochspannungs-Gleichstromleitung (2) angeschlossen zu werden, wobei die Wechselstrom-Leistungseingänge (11) und die Gleichstrom-Leistungsausgänge (13) der Vielzahl von Umwandlungsmodulen (10) sowohl auf der Wechselstromseite als auch der Gleichstromseite in Reihe geschaltet sind, wobei jedes Modul (10) einen AC-DC-Wandler (3) umfasst, der konfiguriert ist, die Wechselspannung über den Eingang (11) zu empfangen und die Wechselspannung in eine niedrige oder mittlere Gleichspannung umzuwandeln, und mindestens zwei DC-DC-Wandler (4), die mit dem Ausgang (12) des AC-DC-Wandlers (3) verbunden sind und konfiguriert sind, die niedrige oder mittlere Gleichspannung in eine niedrige, mittlere oder hohe Gleichspannung umzuwandeln, wobei die Ausgänge (13) des Moduls (10) den Ausgängen des DC-DC-Wandlers (4) entsprechen, wobei die Vorrichtung (100) konfiguriert ist, mit mindestens einer Hochspannungs-Gleichstromleitung (2) mittels der Serienschaltung der Ausgänge (13) der DC-DC-Wandler (4) der verschiedenen Module (10), die der Hochspannungsleitung (2) entsprechen, verbunden zu werden, und wobei jeder DC-DC-Wandler (4) einen Transformator (5) mit einer Topologie umfasst, die die galvanische Trennung zwischen seiner Primärseite (41) und seiner Sekundärseite (42) gewährleistet,
**dadurch gekennzeichnet, dass**
die Vorrichtung (100) ferner konfiguriert ist, mit einer Vielzahl von Hochspannungs-Gleichstromleitungen (2) verbunden zu werden, wobei jedes Modul (10) der Vorrichtung (100) einen DC-DC-Wandler (4) für jede Leitung (2) umfasst und alle DC-DC-Wandler (4) eines einzelnen Moduls (10) konfiguriert sind, den Ausgang (12) des AC-DC-Wandlers (3) desselben Moduls (10) zu empfangen und in diesen mittels der Reihenschaltung der Ausgänge (13) der verschiedenen Module (10), die einer der Hochspannungs-Gleichstromleitungen (2) entsprechen, in die Hochspannungs-Gleichstromleistung umzuwandeln, die für die entsprechende Hochspannungs-Gleichstromleitung (2) erforderliche ist.

2. Vorrichtung nach Anspruch 1, wobei der AC-DC-Wandler (3) vom H-Brückentyp ist.

3. Vorrichtung nach Anspruch 2, wobei die Vorrichtung (100) über die Reihenschaltung der AC-DC-Wandler (3) der verschiedenen Module (10) mit einem dreiphasigen Mittel- oder Hochspannungs-Wechselstromnetz verbunden ist, wobei die AC-DC-Wandler (3) derart verbunden sind, dass die entsprechenden Eingänge (11) drei unabhängige Serien (20) bilden, die in einer Stern-Konfiguration angeordnet sind.

4. Vorrichtung nach Anspruch 2, wobei die Vorrichtung (100) über die Reihenschaltung der AC-DC-Wandler (3) der verschiedenen Module (10) mit einem dreiphasigen Mittel- oder Hochspannungs-Wechselstromnetz verbunden ist, wobei die AC-DC-Wandler (3) derart verbunden sind, dass die entsprechenden Eingänge (11) drei unabhängige Serien (20) bilden, die in einer Dreieck-Konfiguration angeordnet sind.

5. Elektrisches Gleichstrom-Leistungsübertragungssystem, umfassend eine Vielzahl von Leistungswandlervorrichtungen zum Umwandeln von Wechselstromleistung in Gleichstromleistung, die miteinander verbunden sind, **dadurch gekennzeichnet, dass** wenigstens eine der Vorrichtungen eine Vorrichtung (100) nach einem der vorhergehenden Ansprüche ist.

## Revendications

1. Appareil de conversion de courant électrique pour un système de transmission d'électricité en courant continu, comprenant une pluralité de modules de conversion (10), avec une entrée de courant alternatif (11) configurée pour recevoir le courant alternatif (CA) à convertir et une sortie de courant continu (13) configurée pour être connectée à une ligne de courant continu haute tension (2), lesdites entrées de courant alternatif (11) et sorties de courant continu (13) de ladite pluralité de modules de conversion (10) étant connectées en série à la fois du côté alternatif et du côté continu, chaque module (10) comprenant un convertisseur CA-CC (3) configuré pour recevoir la tension alternative par l'entrée (11) et convertir la tension alternative en une tension continue basse ou moyenne, et au moins deux convertisseurs CA-CC (4) connectés à la sortie (12) du convertisseur CA-CC (3) et configurés pour convertir la tension continue basse ou moyenne en une tension continue basse, moyenne ou haute, les sorties (13) du module (10) correspondant aux sorties des convertisseurs CA-CC (4), l'appareil (100) étant configuré pour être connecté à au moins une ligne de courant continu haute tension (2) au moyen de la connexion en série des sorties (13) des convertisseurs CA-CC (4) des différents modules (10) correspondant à ladite ligne haute tension (2), et dans lequel chaque convertisseur CA-CC (4) comprend un transformateur (5) présentant une topologie qui garantit l'isolation galvanique entre son primaire (41) et son secondaire (42),
**caractérisé en ce que**
l'appareil (100) est en outre configuré pour être connecté à une pluralité de lignes de courant continu haute tension (2), chaque module (10) de l'appareil (100) comprenant un convertisseur CA-CC (4) pour chaque ligne (2), et tous les convertisseurs CA-CC (4) d'un unique module (10) configurés pour recevoir la sortie (12) du convertisseur CA-CC (3) du même module (10), et pour le convertir en courant continu haute tension requis pour la ligne de courant continu haute tension (2) correspondante au moyen de la connexion en série des sorties (13) des différents modules (10) correspondant à l'une des lignes de courant continu haute tension (2).

2. Appareil selon la revendication 1, dans lequel le convertisseur CA-CC (3) est du type à pont en H.

3. Appareil selon la revendication 2, l'appareil (100) étant connecté à un réseau en courant alternatif moyenne ou haute tension triphasé au moyen de la connexion en série des convertisseurs CA-CC (3) des différents modules (10), les convertisseurs CA-CC (3) étant connectés de telle manière que les entrées (11) correspondantes forment trois séries indépendantes (20) disposées selon une configuration en étoile.

4. Appareil selon la revendication 2, l'appareil (100) étant connecté à un réseau en courant alternatif moyenne ou haute tension triphasé au moyen de la connexion en série des convertisseurs CA-CC (3) des différents modules (10), les convertisseurs CA-CC (3) étant connectés de telle manière que les entrées (11) correspondantes forment trois séries indépendantes (20') disposées selon une configuration en triangle.

5. Système de transmission d'électricité en courant continu, comprenant une pluralité d'appareils de conversion de courant électrique pour convertir un courant alternatif en courant continu connectés les uns aux autres, **caractérisé en ce qu'**au moins l'un des appareils est un appareil (100) selon l'une quelconque des revendications précédentes.
